# FASCICULE DE BREVET EUROPEEN

(11) **EP 0 883 364 B1**
(45) Date de publication et mention de la délivrance du brevet: **26.03.2003**
(21) Numéro de dépôt: 97905216.4
(22) Date de dépôt: 17.02.1997
(51) Int. Cl.: A47J 37/12

(54) **FRITEUSE ELECTRIQUE ET PROCEDE DE COMMANDE DE CUISSON D'UNE TELLE FRITEUSE**
ELEKTRISCHES FRITIERGERÄT UND VERFAHREN ZUM STEUERN DES KOCHVORGANGS SOLCHES FRITIERGERÄT
ELECTRIC DEEP FRYER AND COOKING CONTROL METHOD THEREFOR

(30) Priorité: 22.02.1996 FR 9602201
(43) Date de publication de la demande: 16.12.1998
(73) Titulaire: SEB S.A., 69130 Ecully (FR)
(72) Inventeur: BAILLIEUL, Philippe, Louis, Robert, F-14280 Saint-Germain-la-Blanche-Herbe (FR); IMBEAUD, Jacques, F-14000 Caen (FR); LETOREY, Joseph, F-14390 Varaville (FR)
(74) Mandataire: Kiehl, Hubert
(86) Numéro de dépôt international: FR9700294
(87) Numéro de publication internationale: WO97030618

(56) Documents cités:
- GB-A- 2 098 753
- US-A- 4 601 004
- US-A- 4 913 038

## Description

La présente invention se rapporte aux friteuses électriques ménagères, notamment mais non exclusivement aux friteuses automatiques, comportant une cuve placée dans un boîtier et contenant un bain de cuisson, des moyens de chauffage électrique adaptés à chauffer le bain de cuisson, un panier de réception des aliments à frire monté dans ladite cuve, et un tableau de commande qui comporte des moyens électroniques de commande automatique d'un cycle de cuisson des aliments à frire, et des premiers moyens permettant de sélectionner une température de cuisson fonction d'un type d'aliment particulier à frire et fournissant aux moyens de commande automatique une première information représentative de la température de cuisson sélectionnée.

Dans des friteuses connues de ce genre, telles que celle décrite dans le document US-A-4 601 004, les moyens électroniques de commande automatique déterminent le temps de cuisson en tenant compte uniquement de la température appropriée de cuisson qui dépend du type d'aliment particulier à frire, tel que par exemple frites, champignons, poissons maigres, viandes. Cependant, le temps de cuisson ainsi déterminé n'est pas optimisé pour obtenir des aliments suffisamment cuits et dorés car le poids, même approximatif, des aliments à frire n'est pas pris en compte par les moyens de commande automatique de la friteuse.

D'après le document US-A-4 913 038, la friteuse est équipée d'un ordinateur de cuisson destiné à gérer des cycles de cuisson à partir de données programmées par l'utilisateur en fonction de l'aliment à frire, telles qu'en particulier le temps de cuisson, la température, un facteur d'anticipation dit de charge premettant de réduire au maximum le retard apparaissant entre le moment où la température du bain de cuisson chute et le moment où cette chute de température est détectée, aisni qu'un facteur de compensation dit de charge permettant d'ajuster le temps de cuisson en fonction des variations de température du bain de cuisson. Toutefois, l'automatisme de cette friteuse est relativement complexe et augmente donc le coût de fabrication de la friteuse.

L'invention a notamment pour but de remédier à ces inconvénients et de réaliser une friteuse à cuisson automatique, du type exposé ci-dessus, qui permette de déterminer d'une manière simple le temps de cuisson optimal permettant d'obtenir des aliments suffisamment cuits et dorés.

Selon l'invention, le tableau de commande comprend en outre des seconds moyens permettant de sélectionner un code image de la charge du panier contenant les aliments à frire et fournissant aux moyens de commande automatique une seconde information représentative du code sélectionné image de la charge du panier, et les moyens de commande automatique sont adaptés à calculer un temps de cuisson des aliments à frire en fonction des première et seconde informations issues respectivement des premiers et seconds moyens de sélection.

Ainsi, on comprend que la combinaison de la sélection de la température de cuisson et de celle du code image de la charge du panier permet d'optimiser le temps de cuisson calculé par les moyens de commande automatique. De plus, cette sélection du code constituant en soi une image de la propre charge du panier, et de fait, ne nécessitant pas de déterminer le poids exact des aliments à frire, contribue à simplifier notablement l'automatisme de la friteuse, et donc à en diminuer son coût de réalisation. En outre, le fait de coder visuellement la charge du panier facilite la sélection de celle-ci par l'utilisateur et rend cette sélection particulièrement conviviale pour l'utilisateur.

Suivant un exemple de réalisation préféré, les seconds moyens de sélection comportent un bouton sélecteur ménagé en façade du tableau de commande et susceptible d'occuper sélectivement plusieurs positions repérées chacune par un symbole particulier d'identification constituant le code image de la charge du panier. De préférence, les symboles d'identification sont au nombre de trois et correspondent respectivement à une demi-charge du panier, à une charge normale du panier et à une surcharge du panier.

L'invention vise également un procédé de commande de cuisson d'une friteuse électrique selon l'invention, ce procédé étant caractérisé en ce qu'il comporte les opérations suivantes :
- sélection d'une température de cuisson correspondant à un type d'aliment particulier à frire ;
- sélection d'un code image de la charge du panier ;
- calcul à l'aide des moyens de commande automatique d'un temps de cuisson en fonction de la température de cuisson sélectionnée et du code sélectionné image de la charge du panier ;
- affichage du temps de cuisson calculé ;
- et déclenchement d'un cycle automatique de cuisson au moyen d'un organe de commande qui actionne les moyens de commande automatique dès que la température de cuisson sélectionnée est atteinte par le bain de cuisson.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'une friteuse selon l'invention ;
- la figure 2 est une vue de face agrandie d'un tableau de commande équipant la friteuse de la figure 1 ; et
- la figure 3 est une représentation schématique des différents constituants de l'automatisme de la friteuse de la figure 1.

Dans ce qui suit, on décrira la friteuse électrique conforme à l'invention dans le cadre d'une friteuse à fonctionnement entièrement automatique, étant entendu que l'invention s'applique également à une friteuse électrique classique.

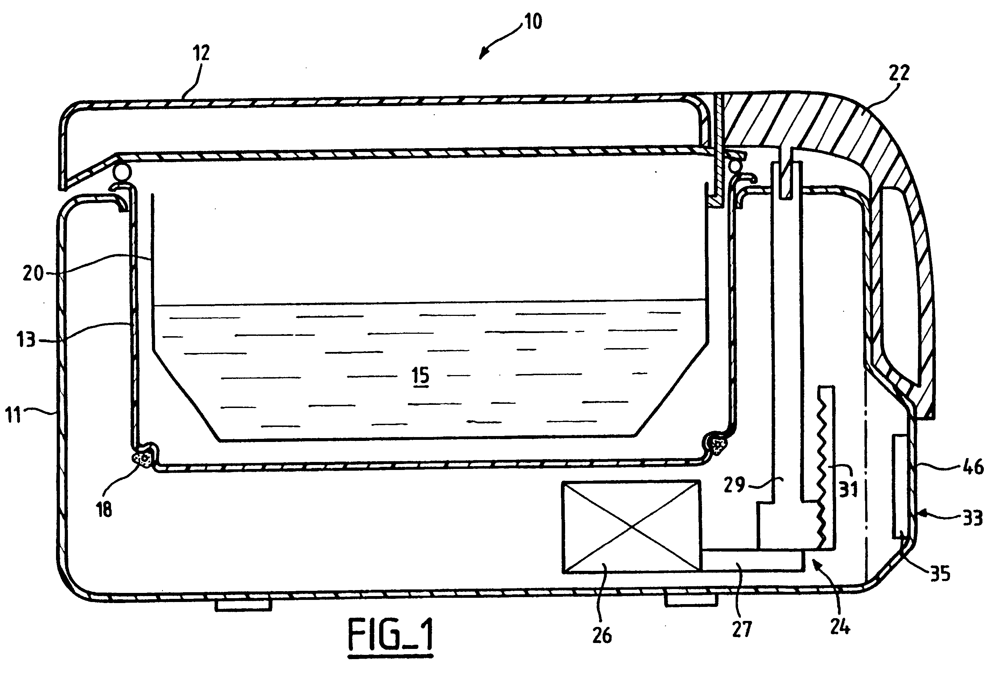

Dans l'exemple de réalisation illustré schématiquement à la figure 1, la friteuse automatique 10 à usage ménager comprend, dans un boîtier 11 pourvu d'un couvercle de fermeture 12, une cuve 13 contenant un bain de cuisson 15 constitué soit par de l'huile, soit par de la graisse provenant de la fusion d'un bloc de graisse, des moyens de chauffage électrique constitués présentement par une résistance tubulaire blindée 18 fixée sur le fond de la cuve 13 et adaptée à chauffer le bain de cuisson, et un panier perforé 20 de réception des aliments à frire (non représentés) qui est muni d'une poignée 22 et qui est monté mobile dans la cuve entre deux positions, soit une position abaissée (figure 1) pour laquelle ce panier est plongé dans le bain de cuisson, soit une position élevée pour laquelle ce panier est maintenu au-dessus du bain de cuisson. Le passage du panier 20 entre ces deux positions s'effectue grâce à des moyens électromécaniques 24 de descente et remontée qui sont agencés dans le boîtier 11 et qui comprennent, dans cet exemple de réalisation de la figure 1, un moteur synchrone 26 équipé d'un réducteur 27 qui actionne une pièce formant ascenseur 29 venant en prise avec la poignée 22 et se déplaçant verticalement entre les parois latérales de la cuve et du boîtier au moyen d'un système à crémaillère 31.

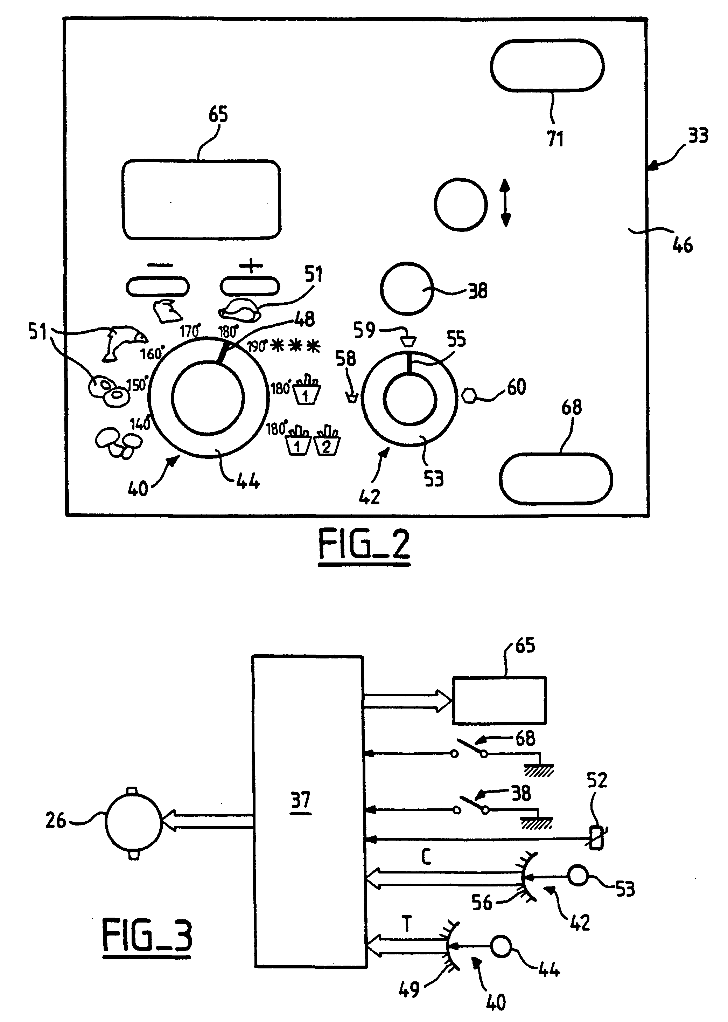

La friteuse 10, figure 1, comporte en outre sur la face frontale du boîtier 11 un tableau de commande 33, mieux visible à la figure 2, logeant une plaquette de circuit imprimé représentée schématiquement en 35 sur la figure 1 et qui comporte des moyens électroniques de commande automatique constitués par un microcontrôleur 37 (voir figure 3), par exemple du type 47C222 commercialisé par la société TOSHIBA, adapté à déclencher, en réponse à l'actionnement d'une touche formant commutateur 38 agencée en façade du tableau de commande (voir figures 2 et 3), un cycle automatique de cuisson des aliments en commandant l'alimentation électrique des moyens électromécaniques 24 de descente et remontée du panier 20.

Le tableau de commande 33 comporte des premiers moyens de sélection 40 assimilables à un thermostat, qui sont destinés à réguler la température du bain de cuisson en fonction du type d'aliment particulier à frire, et dont la température de fonctionnement est comprise entre 140°C et 190°C. Ces moyens de sélection 40, que l'on décrira en détail par la suite, fournissent au microcontrôleur 37 une première information, notée T à la figure 3, qui est représentative de la température de cuisson sélectionnée.

Selon l'invention, le tableau de commande 33 comprend en outre des seconds moyens 42 permettant de sélectionner un code image de la charge du panier 20 contenant les aliments à frire et fournissant au microcontrôleur 37 une seconde information, notée C à la figure 3, représentative de la charge du panier, et le microcontrôleur 37 est adapté à calculer un temps de cuisson considéré comme idéal pour une bonne friture et déterminé en fonction des deux informations T et C issues respectivement des deux moyens de sélection 40 et 42.

En regard des figures 2 et 3, dans cet exemple de réalisation, les moyens de sélection 40 de la température de cuisson comportent un bouton sélecteur 44 monté rotatif en face avant 46 du tableau de commande 33 (figure 2), pourvu d'un index de repérage 48 et lié à un potentiomètre 49 qui est agencé sur la plaquette de circuit imprimé 35 (figure 1) et qui est relié au microcontrôleur 37 pour lui transmettre l'information T représentative de la température de cuisson fonction du type d'aliment particulier à frire. Comme le montre la figure 2, le bouton sélecteur 44 est susceptible d'occuper sélectivement plusieurs positions repérées respectivement par des symboles 51 d'identification des différents aliments, tels que champignons, beignets, poissons maigres, frites, etc., chacun de ces symboles 51 étant associé à un marquage d'une valeur de température de cuisson convenant à l'aliment sélectionné, comme visible à la figure 2.

De préférence, la valeur de température de cuisson est régulée par exemple au moyen d'une sonde thermosensible du type CTN ("coefficient de température négatif"), repérée en 52 à la figure 3, qui est plongée dans le bain de cuisson 15 de la friteuse.

Dans cet exemple, figures 2 et 3, les moyens de sélection 42 du code image de la charge du panier 20 comportent un bouton sélecteur 53 monté également rotatif en face avant 46 du tableau de commande 33 (figure 2), pourvu d'un index de repérage 55 et lié à un potentiomètre 56 qui est agencé sur la plaquette de circuit imprimé 35 (figure 1) et qui est relié au microcontrôleur 37 pour lui transmettre l'information C représentative de la charge du panier. En regard de la figure 2, le bouton sélecteur 53 est susceptible d'occuper sélectivement plusieurs positions, en l'occurrence trois positions, repérées chacune par un symbole particulier d'identification 58;59;60 constituant le code image de la charge du panier et correspondant soit à une demi-charge du panier, soit à une charge normale du panier, soit à une surcharge du panier.

Cette réalisation des moyens de sélection 42 du code image de la charge du panier est particulièrement simple et permet à l'utilisateur de visualiser rapidement la charge du panier en aliments qu'il désire frire, sans avoir besoin pour cela de connaître le poids exact des aliments à frire ; cette simple visualisation de la charge du panier par l'utilisateur fait donc montre d'une grande convivialité.

Dans une variante d'exécution non représentée, les moyens de sélection 42 comportent un détecteur de charge du panier apte à transmettre au microcontrôleur 37 un signal représentatif des plages de poids correspondant aux codes image de la charge du panier.

On notera que le microcontrôleur 37 peut comporter des moyens de pré-programmation (non représentés) de tableaux indiquant la température et le temps de cuisson en fonction de la charge du panier.

En regard des figures 2 et 3, la face avant 46 du tableau de commande 33 comporte un moyen de visualisation 65 relié au microcontrôleur 37 et destiné à afficher le temps de cuisson optimal calculé par le microcontrôleur en fonction des deux informations de consigne T et C représentatives respectivement de la température de cuisson sélectionnée et du code sélectionné image de la charge du panier.

Sur les figures 2 et 3, on a représenté en 68 un bouton commutateur marche/arrêt de la friteuse, et sur la figure 2, on a désigné en 71 un bouton commutateur de sélection huile/graisse.

On va maintenant expliciter le fonctionnement automatique de la friteuse décrite ci-dessus à travers le procédé de commande de cuisson selon l'invention, en supposant par exemple que le commutateur sélecteur 71 est en position "huile". En outre, on considérera que l'utilisateur souhaite frire un poulet découpé en morceaux tel qu'il constitue une charge normale du panier.

L'utilisateur sélectionne la température de cuisson correspondant au poulet, et pour ce faire, tourne le bouton 44 en plaçant l'index 48 de celui-ci en face du symbole 51 représentant le poulet et étant associé à la température de cuisson convenant au poulet, en l'occurrence 180°C comme illustré à la figure 2. De même, l'utilisateur sélectionne le code image de la charge normale du panier, et pour ce faire, tourne le bouton 53 en plaçant l'index 55 de celui-ci en face du symbole 59 identifiant la charge normale du panier, comme représenté à la figure 2.

Après mise sous tension de la friteuse au moyen du bouton commutateur 68, la résistance 18 (figure 1) chauffe et le démarrage du cycle automatique est commandé en appuyant sur la touche 38. Lors de cette mise sous tension de la friteuse, le microcontrôleur 37 commande le circuit d'alimentation électrique du moteur 26 qui provoque, via la pièce formant ascenseur 29, la montée du panier 20 en sa position élevée. Le microcontrôleur 37 calcule le temps de cuisson en fonction des deux informations de consigne issues respectivement des deux potentiomètres 49 et 56, dont l'une T est représentative de la température de cuisson sélectionnée, en l'occurrence 180°C, et dont l'autre C est représentative du code sélectionné 59 image de la charge normale du panier. Dans cet exemple (panier chargé normalement en morceaux de poulet), le temps de cuisson calculé et considéré comme idéal pour un bon poulet est de 7 minutes et s'inscrit sur l'afficheur 65.

On notera que le temps de cuisson calculé par le microcontrôleur 37 peut également s'inscrire sur l'afficheur 65 dès la mise sous tension de la friteuse.

Dès que la température de cuisson sélectionnée (180°C) est atteinte par le bain de cuisson 15 et est validée par la sonde CTN de régulation 52, le microcontrôleur 37 déclenche le cycle automatique de cuisson au cours duquel le panier 20 est plongé dans le bain de cuisson par suite de la commande du moteur 26.

En fin de cycle, en l'occurrence après 7 minutes, le microcontrôleur 37 commande l'alimentation électrique du moteur 26 de telle sorte qu'il provoque la remontée du panier 20 jusqu'en sa position élevée.

Pour certains aliments, tels qu'en particulier les frites, la cuisson peut être effectuée, comme cela est bien connu, en deux plongées du panier dans le bain de cuisson 15, la seconde plongée s'enchaînant automatiquement après la première plongée du panier.

En outre, on indiquera que des moyens de sécurité (non représentés) sont prévus pour empêcher toute modification du temps de cuisson calculé dans le cas où, durant le fonctionnement automatique de la friteuse, l'utilisateur tourne par inadvertance l'un et/ou l'autre des deux boutons de sélection 44 et 53 (figure 2).

On notera par ailleurs que dans le cas d'une friteuse électrique à cuisson automatique conforme à l'invention, mais à fonctionnement manuel, les moyens électromécaniques 24 de descente et remontée du panier commandés par le microcontrôleur 37 sont supprimés, un capteur de détection de la position abaissée du panier étant alors prévu pour le démarrage automatique du cycle de cuisson.

## Revendications

1. Friteuse électrique comportant une cuve (13) placée dans un boîtier (11) et contenant un bain de cuisson (15), des moyens de chauffage électrique (18) adaptés à chauffer le bain de cuisson, un panier (20) de réception des aliments à frire monté dans ladite cuve (13), et un tableau de commande (33) qui comporte des moyens électroniques (37) de commande automatique d'un cycle de cuisson des aliments à frire, et des premiers moyens (40) permettant de sélectionner une température de cuisson fonction d'un type d'aliment particulier à frire et fournissant aux moyens de commande automatique (37) une première information (T) représentative de la température de cuisson sélectionnée,
**caractérisée en ce que** le tableau de commande (33) comprend en outre des seconds moyens (42) permettant de sélectionner un code image de la charge du panier (20) contenant les aliments à frire et fournissant aux moyens de commande automatique (37) une seconde information (C) représentative du code sélectionné image de la charge du panier, et les moyens de commande automatique (37) sont adaptés à calculer un temps de cuisson des aliments à frire en fonction des première (T) et seconde (C) informations issues respectivement des premiers (40) et seconds (42) moyens de sélection.

2. Friteuse électrique selon la revendication 1,
**caractérisée en ce que** les seconds moyens de sélection (42) comportent un bouton sélecteur (53) ménagé en façade du tableau de commande (33) et susceptible d'occuper sélectivement plusieurs positions repérées chacune par un symbole particulier d'identification (58;59;60) constituant le code image de la charge du panier (20).

3. Friteuse électrique selon la revendication 2,
**caractérisée en ce que** les symboles d'identification (58,59,60) sont au nombre de trois et correspondent respectivement à une demi-charge du panier, à une charge normale du panier et à une surcharge du panier.

4. Friteuse électrique selon la revendication 1,
**caractérisée en ce que** les seconds moyens de sélection (42) comportent un détecteur de charge du panier (20) apte à transmettre aux moyens de commande automatique (37) un signal représentatif des plages de poids correspondant aux codes image de la charge du panier.

5. Friteuse électrique selon l'une quelconque des revendications précédentes,
**caractérisée en ce** les premiers moyens de sélection (40) comportent un autre bouton sélecteur (44) ménagé en façade du tableau de commande (33) et susceptible d'occuper sélectivement plusieurs positions repérées respectivement par des symboles (51) d'identification des différents aliments, chacun de ces symboles (51) étant associé à un marquage d'une valeur de température de cuisson convenant à l'aliment considéré.

6. Friteuse électrique selon l'une quelconque des revendications précédentes,
**caractérisée en ce que** le tableau de commande (33) présente en façade un moyen de visualisation (65) relié aux moyens de commande automatique (37) et affichant le temps de cuisson calculé.

7. Friteuse électrique selon l'une quelconque des revendications précédentes, dans laquelle le panier (20) de réception des aliments à frire est monté mobile dans la cuve (13) et est susceptible d'occuper, grâce à des moyens électromécaniques (24) de descente et de remontée du panier (20), soit une position élevée pour laquelle ce panier est maintenu au-dessus du bain de cuisson (15), soit une position abaissée pour laquelle ce panier est plongé dans le bain de cuisson (15),
**caractérisée en ce que** les moyens de commande automatique (37) sont adaptés à commander l'alimentation électrique des moyens électromécaniques (24) de descente et de remontée du panier (20).

8. Friteuse électrique selon l'une des revendications 2 à 7,
**caractérisée en ce que** les moyens de commande automatique comportent un microcontrôleur (37), et chaque bouton sélecteur (44;53) est lié à un potentiomètre (49;56) relié au microcontrôleur (37).

9. Procédé de commande de cuisson d'une friteuse électrique selon l'une des revendications 1 à 8,
**caractérisé en ce qu'**il comporte les opérations suivantes :
- sélection d'une température de cuisson correspondant à un type d'aliment particulier à frire ;
- sélection d'un code image de la charge du panier ;
- calcul à l'aide des moyens de commande automatique (37) d'un temps de cuisson en fonction de la température de cuisson sélectionnée et du code sélectionné image de la charge du panier ;
- affichage du temps de cuisson calculé ;
- et déclenchement d'un cycle automatique de cuisson au moyen d'un organe de commande (38) qui actionne les moyens de commande automatique (37) dès que la température de cuisson sélectionnée est atteinte par le bain de cuisson (15).

10. Procédé de commande de cuisson selon la revendication 9,
**caractérisé en ce que** le temps de cuisson calculé est affiché dès la mise sous tension des moyens de chauffage (18).

## Claims

1. An electric fryer comprising a vessel (13) placed in a housing (11) and containing a cooking bath (15), electric heater means (18) adapted to heat the cooking bath, a basket (20) for receiving food to be fried mounted in said vessel (13), and a control panel (33) which includes electronic control means (37) for automatically controlling a cooking cycle for the food to be fried, and first means (40) enabling a cooking temperature to be selected as a function of a particular type of food to be fried, and providing the automatic control means (37) with first data (T) representative of the selected cooking temperature, the fryer being **characterized in that** the control panel (33) further comprises second means (42) for selecting an image encoding the load in the basket (20) containing the food that is to be fried, and providing the automatic control means (37) with second data (C) representative of the selected image encoding the load in the basket, and the automatic control means (37) are adapted to calculate a cooking time for the food to be fried as a function of the first and second data (T, C) issued from the first and second selection means (40,42) respectively.

2. An electric fryer according to claim 1, **characterized in that** the second selection means (42) comprise a selector knob (53) provided on the front face of the control panel (33) and capable of selectively occupying a plurality of positions each marked by a particular identification symbol (58; 59; 60) constituting the image encoding the load in the basket (20).

3. An electric fryer according to claim 2, **characterized in that** the identification symbols (58, 59, 60) are three in number and correspond to a basket that is half full, that is normally full, and this is very full respectively.

4. An electric fryer according to claim 1, **characterized in that** the second selection means (42) include a load detector for detecting the load in the basket (20), said detector being capable of supplying the automatic control means (37) with a signal that is representative of the ranges of weights corresponding to the images encoding the load in the basket.

5. An electric fryer according to any preceding claim, **characterized in that** the first selection means (40) comprise another selector knob (44) provided on the front face of the control panel (33) and capable of selectively occupying a plurality of positions respectively marked by identification symbols (51) for various foods, each of said symbols (51) being associated with a marking of a cooking temperature that is suitable for the food under consideration.

6. An electric fryer according to any preceding claim, **characterized in that** the control panel (33) presents, on the front face, display means (65) connected to the automatic control means (37) and displaying the calculated cooking time.

7. An electric fryer according to any preceding claim, in which the basket (20) for receiving the food to be fried is movably mounted in the vessel (13) and is capable of occupying, as a result of the electromechanical means (24) for lowering and raising the basket (20), either a raised position in which the basket is held above the cooking bath (15), or a lowered position in which the basket is immersed in the cooking bath (15), the fryer being **characterized in that** the automatic control means (37) are adapted to control the electricity supply to the electromechanical means (24) for lowering and raising the basket (20).

8. An electric fryer according to any one of claims 2 to 7, **characterized in that** the automatic control means include a microcontroller (37), and each selector knob (44; 53) is connected to a potentiometer (49; 56) connected to the microcontroller (37).

9. A cooking control method for an electric fryer according to any one of claims 1 to 8, the method being **characterized in that** it comprises the following operations:
selecting a cooking temperature corresponding to a particular type of food to be fried;
selecting an image encoding the load in the basket;
calculating, by means of the automatic control means (37), a cooking time as a function of the selected cooking temperature and of the selected image encoding the load in the basket;
displaying the calculated cooking time; and
triggering an automatic cooking cycle by means of a control member (38) which actuates the automatic control means (37) as soon as the selected cooking temperature is reached by the cooking bath (15).

10. A cooking control method according to claim 9, **characterized in that** the calculated cooking time is displayed as soon as the heater means (18) is switched on.

## Patentansprüche

1. Elektrisches Fritiergerät mit einem Behälter (13), der in einem Gehäuse (11) angeordnet ist und ein Fritierbad (15) enthält, elektrischen Heizmitteln (18), die dazu ausgelegt sind, das Fritierbad zu erhitzen, einem im genannten Behälter (13) angebrachten Korb (20) zum Aufnehmen der zu fritierenden Nahrungsmittel, und einem Bedienfeld (33), das elektronische Mittel (37) zum automatischen Steuern eines Fritierzyklus der zu fritierenden Nahrungsmittel und erste Mittel (40) enthält, die das Auswählen einer Fritiertemperatur je nach Art eines bestimmten, zu fritierenden Nahrungsmittels ermöglichen und den Mitteln (37) zur automatischen Steuerung eine erste Information (T) über die ausgewählte Fritiertemperatur liefern, **dadurch gekennzeichnet, dass** das Bedienfeld (33) femer zweite Mittel (42) enthält, die das Auswählen eines Symbolbilds für die Ladung des die zu fritierenden Nahrungsmittel enthaltenden Korbs (20) ermöglichen und den Mitteln (37) zur automatischen Steuerung eine zweite Information (C) über das ausgewählte Symbolbild für die Ladung des Korbs liefern, und die Mittel (37) zur automatischen Steuerung dazu ausgelegt sind, in Abhängigkeit von der ersten Information (T) und der zweiten Information (C), die aus den ersten (40) bzw. zweiten Auswahlmitteln (42) stammen, eine Fritierzeit der zu fritierenden Nahrungsmittel zu errechnen.

2. Elektrisches Fritiergerät nach Anspruch 1, **dadurch gekennzeichnet, dass** die zweiten Auswahlmittel (42) einen Auswahlknopf (53) enthalten, der an der Vorderseite des Bedienfelds (33) angeordnet ist und selektiv mehrere Stellungen einnehmen kann, die jeweils durch ein bestimmtes Identifikationssymbol (58; 59; 60) festgelegt sind, welches das Symbolbild für die Ladung des Korbs (20) bildet.

3. Elektrisches Fritiergerät nach Anspruch 2, **dadurch gekennzeichnet, dass** drei Identifikationssymbole (58, 59, 60) vorgesehen sind, die einer halben Korbladung, einer normalen Korbladung bzw. einer Korbüberladung entsprechen.

4. Elektrisches Fritiergerät nach Anspruch 1, **dadurch gekennzeichnet, dass** die zweiten Auswahlmittel (42) einen Sensor für die Ladung des Korbs (20) enthalten, der den automatischen Steuermitteln (37) ein Signal übertragen kann, welches Gewichtsbereiche darstellt, die den Symbolbildern für die Korbladung entsprechen.

5. Elektrisches Fritiergerät nach einem der vorangehenden Ansprüche, **dadurch gekennzeichnet, dass** die ersten Auswahlmittel (40) einen weiteren Auswahlknopf (44) enthalten, der an der Vorderseite des Bedienfelds (33) angeordnet ist und selektiv mehrere Stellungen einnehmen kann, die durch jeweilige Symbole (51) zum Identifizieren verschiedener Nahrungsmittel festgelegt sind, wobei jedem dieser Symbole (51) eine Markierung eines für das betreffende Nahrungsmittel geeigneten Fritiertemperaturwerts zugeordnet ist.

6. Elektrisches Fritiergerät nach einem der vorangehenden Ansprüche, **dadurch gekennzeichnet, dass** das Bedienfeld (33) an der Vorderseite ein Visualisierungsmittel (65) aufweist, das mit den automatischen Steuermitteln (37) verbunden ist und die errechnete Fritierzeit anzeigt.

7. Elektrisches Fritiergerät nach einem der vorangehenden Ansprüche, bei dem der Korb (20) zum Aufnehmen der zu fritierenden Nahrungsmittel im Behälter beweglich gelagert ist und aufgrund elektromechanischer Mittel (24) zum Senken und Heben des Korbs (20) entweder eine angehobene Stellung einnehmen kann, in der dieser Korb oberhalb des Fritierbads (15) gehalten ist, oder eine abgesenkte Stellung, in der dieser Korb in das Fritierbad (15) eingetaucht ist, **dadurch gekennzeichnet, dass** die automatischen Steuermittel (37) dazu ausgelegt sind, die Stromversorgung der elektromechanischen Mittel (24) zum Senken und Heben des Korbs (20) zu steuern.

8. Elektrisches Fritiergerät nach einem der Ansprüche 2 bis 7, **dadurch gekennzeichnet, dass** die automatischen Steuermittel einen Mikrocontroller (37) enthalten und jeder Auswahlknopf (44; 53) mit einem Potentiometer (49; 56) verbunden ist, das mit dem Mikrocontroller (37) verbunden ist.

9. Verfahren zum Steuern des Fritiervorgangs eines elektrischen Fritiergeräts nach einem der Ansprüche 1 bis 8, **dadurch gekennzeichnet, dass** es folgende Schritte umfasst:
- Auswählen einer Fritiertemperatur, die einer bestimmten Art von zu fritierenden Nahrungsmitteln entspricht,
- Auswählen eines Symbolbilds für die Ladung des Korbs,
- Errechnen einer Fritierzeit in Abhängigkeit von der ausgewählten Fritiertemperatur und des ausgewählten Symbolbilds für die Ladung des Korbs mit Hilfe der automatischen Steuermittel (37),
- Anzeigen der errechneten Fritierzeit, und
- Auslösen eines automatischen Fritierzyklus mittels eines Steuerglieds (38), das die automatischen Steuermittel (37) betätigt, sobald die ausgewählte Fritiertemperatur vom Fritierbad (15) erreicht ist.

10. Verfahren zum Steuern des Fritiervorgangs nach Anspruch 9, **dadurch gekennzeichnet, dass** die errechnete Fritierzeit angezeigt wird, sobald die Heizmittel (18) unter Spannung gesetzt sind.
